# EUROPÄISCHE PATENTSCHRIFT

(11) **EP 4 165 670 B1**
(45) Veröffentlichungstag und Bekanntmachung des Hinweises auf die Patenterteilung: **09.07.2025**
(21) Anmeldenummer: 21754753.8
(22) Anmeldetag: 27.07.2021
(51) Int. Cl.: H01H 9/18, H01H 71/04, H01H 71/12

(54) **LEISTUNGSSCHALTER, ABNEHMBARES DISPLAY UND ELEKTRONISCHE AUSLÖSEEINHEIT FÜR EINEN LEISTUNGSSCHALTER**
CIRCUIT BREAKER, REMOVABLE DISPLAY, AND ELECTRONIC TRIGGER UNIT FOR A CIRCUIT BREAKER
DISJONCTEUR, UNITÉ D'AFFICHAGE AMOVIBLE ET UNITÉ DE DÉCLENCHEMENT ÉLECTRONIQUE POUR UN DISJONCTEUR

(30) Priorität: 31.08.2020 DE 102020210973
(43) Veröffentlichungstag der Anmeldung: 19.04.2023
(73) Patentinhaber: Siemens Aktiengesellschaft, 80333 München (DE)
(72) Erfinder: GERSTNER, Michael, 91187 Röttenbach (DE); SCHWINN, Bernd, 90768 Fürth (DE); VENKATRAMANI, Anand, 90763 Fürth (DE)
(74) Vertreter: Siemens Patent Attorneys
(86) Internationale Anmeldenummer: PCT/EP2021/071028
(87) Internationale Veröffentlichungsnummer: WO 2022/042980

(56) Entgegenhaltungen:
- EP-A1- 2 321 836
- EP-A2- 1 294 068
- DE-A1- 102015 225 243

## Beschreibung

Die Erfindung betrifft das technische Gebiet eines Leistungsschalters nach dem Oberbegriff von Patentanspruch 1 sowie ein Display für einen Leistungsschalter.

Leistungsschalter sind Schutzgeräte, die ähnlich wie eine Sicherung funktionieren. Leistungsschalter überwachen den durch sie mittels eines Leiters hindurchfließenden Strom und unterbrechen den elektrischen Strom bzw. Energiefluss zu einer Energiesenke bzw. einem Verbraucher, was als Auslösung bezeichnet wird, wenn Schutzparameter, wie Stromgrenzwerte oder Strom-Zeitspannengrenzwerte, d.h. wenn ein Stromwert für eine gewisse Zeitspanne vorliegt, überschritten werden. Die Unterbrechung erfolgt beispielsweise durch Kontakte des Leistungsschalters, die geöffnet werden. Im Unterschied zu einer Sicherung sind diese Schutzparameter bzw. Ansprechwerte bei einem Leistungsschalter einstellbar, beispielsweise mittels einer Steuereinheit, wie einer elektronischen Auslöseeinheit.

Insbesondere für Niederspannungsstromkreise bzw. -netze gibt es abhängig von der Höhe des vorgesehenen elektrischen Stromes im elektrischen Stromkreis verschiedene Typen von Leistungsschaltern. Mit Leistungsschalter im Sinne der Erfindung sind insbesondere Schalter gemeint, wie sie in Niederspannungsanlagen für Ströme von 25 oder 63 bis 6300 Ampere eingesetzt werden. Spezieller werden geschlossene Leistungsschalter für Ströme von 25 oder 63 bis 1600 Ampere, insbesondere von 125 bis 630 oder 1200 Ampere eingesetzt. Offene Leistungsschalter werden insbesondere für Ströme von 630 bis 6300 Ampere, spezieller von 1200 bis 6300 Ampere verwendet.

Offene Leistungsschalter werden auch als Air Circuit Breaker, kurz ACB, und geschlossene Leistungsschalter als Molded Case Circuit Breaker oder Kompaktleistungsschalter, kurz MCCB, bezeichnet.

Mit Niederspannung sind Spannungen bis 1000 Volt Wechselspannung oder 1500 Volt Gleichspannung gemeint. Mit Niederspannung sind ferner Spannungen gemeint, die größer als die Kleinspannung mit Werten von 50 Volt Wechselspannung oder 120 Volt Gleichspannung sind.

Mit Leistungsschalter im Sinne der Erfindung sind Leistungsschalter mit einer als Steuereinheit dienenden elektronischen Auslöseeinheit, auch als Electronic Trip Unit, kurz ETU, bezeichnet, gemeint. Die Steuereinheit überwacht die Höhe des durch Sensoren, wie einem Rogowski-Transformator (Rogowski_spule), gemessenen elektrischen Stromes bzw. zusätzlich in analoger Weise der Spannung oder/und anderer Parameter des elektrischen Stromkreises und bewirkt eine Unterbrechung des elektrischen Stromkreises, wenn Schwellwerte überschritten werden.

Leistungsschalter weisen in der Regel ein Display respektive Anzeigeeinheit auf. Auf diesem können Schutzparamater, Einstellwerte oder/und Messwerte, etc. angezeigt werden. Der Bildschirminhalt dieser Displays ist festgelegt.

Leistungsschalter gemäß dem Stand der Technik sind beispielsweise aus den nachfolgenden Patentanmeldungen bekannt:
°DE°10°2014°217°292°A1; DE°10°2014°217°332°A1;
DE°10°2015°217°108°A1; DE°10°2014°218°831°A1;
DE°10°2014°218°910°A1; DE°10°2016°201°651°A1;
DE°10°2015°226°475°A1; DE°10°2015°216°981°A1;
DE°10°2016°202°827°A1; DE°10°2016°201°659°A1;
DE°10°2015°210°479°A1; DE°10°2014°224°173°A1;
DE°10°2015°216°023°A1; DE°10°2016°217°425°A1;
DE°10°2016°205°196°A1; DE°10°2016°221°093°A1;
DE°10°2017°211°900°A1; DE°10°2017°201°239°A1;
DE°10°2017°205°003°A1; DE°10°2017°205°004°A1;
DE°10°2017°212°477°A1; DE°10°2017°214°903°A1;
DE°10°2017°214°907°A1; DE°10°2017°215°820°A1.

Die WO 2010/026013 A1 offenbart eine Benutzerschnittstelle für einen elektronischen Schalter, welcher für Niederspannungsanwendungen vorgesehen ist. Ein Display der Benutzerschnittstelle ist abnehmbar.

Ferner offenbart die DE 10 2015 225 243 A1 einen elektrischen Schalter zum Schalten eines elektrischen Stroms. Dieser weist eine Auslöseeinheit auf, wobei ein Teil der Auslöseeinheit montierbar und abnehmbar ist.

EP2321836 A1 offenbart einen Leistungsschalter gemäß der Präambel des Anspruchs 1.

Aufgabe der vorliegenden Erfindung ist es, einen Leistungsschalter mit Display eingangs genannter Art zu verbessern, insbesondere die Verwendung eines Displays bzw. Darstellung auf dem Display variabler zu gestalten.

Diese Aufgabe wird durch einen Leistungsschalter mit den Merkmalen des Patentanspruchs 1 bzw. ein Display gemäß Patentanspruch 14 gelöst.

Ein Leistungsschalter für einen Niederspannungsstromkreis, mit Eingangs- und Ausgangsanschlüssen für Leiter des Niederspannungsstromkreises, wobei leistungsschalterintern der Niederspannungsstromkreis unterbrochen oder geschlossen werden kann, mit einem Stromsensor, der die Höhe des elektrischen Stromes im Niederspannungsstromkreis ermittelt und mit einer elektronischen Auslöseeinheit (ETU) verbunden ist, die ein Display zur Anzeige von Informationen aufweist und bei Überschreitung von Stromgrenzwerten oder Strom-Zeit-Grenzwerten den Niederspannungsstromkreis unterbricht, wird erfindungsgemäß derart ausgestaltet, dass das Display abnehmbar ausgestaltet ist.

Dies hat den Vorteil, dass ein abnehmbares Display vorgesehen ist, dass bei kontinuierlichem Betrieb des Leistungsschalters nicht benötigt wird, da hier häufig keine Anzeige erforderlich ist. Störung, Wartung und Inbetriebnahme sind die Hauptanwendungsfälle, bei denen ein Benutzer bzw. Kunde ein (Front-)Display benötigt. Aus diesem Grund ist ein abnehmbares Display vorgesehen, dass der Benutzer bzw. Kunde entfernen bzw. installieren kann.

Vorteilhafte Ausgestaltungen sind in den Unteransprüchen angegeben.

In einer vorteilhaften Ausgestaltung der Erfindung ist das Display zum Aufschnappen oder Einrasten auf der elektronischen Auslöseeinheit (ETU) ausgestaltet.

Dies hat den besonderen Vorteil, dass eine einfache Möglichkeit des Abnehmens bzw. Installierens des Displays gegeben ist.

In einer vorteilhaften Ausgestaltung der Erfindung weist das Display neben einer Anzeigefunktionalität auch eine Eingabefunktionalität auf.

Dies hat den besonderen Vorteil, dass einerseits Eingaben über das Display möglich sind, so dass eine kompakte Realisierung einer Ausgabe- und Eingabe Schnittstelle möglich ist und andererseits bei abgenommenem Display keine Veränderungen der Einstellparameter des Leistungsschalters möglich sind.

Erfindungsgemäß weist das abnehmbare Display einen Sensor auf, zur Ermittlung einer Neigung oder eines Winkels einer waagerechten oder lotrechten respektive horizontalen oder vertikalen Position des Displays. Das Display ist ferner derart ausgestaltet, dass der Inhalt der angezeigten Informationen abhängig von einer horizontalen oder vertikalen Montage des Displays angepasst wird, so dass die angezeigten Informationen nutzerfreundlich ablesbar sind.

Dies hat den besonderen Vorteil, dass das Display beliebig montiert werden kann und die Ausrichtung der angezeigten Informationen auf dem Display entsprechend der Lage des Dis-plays automatisch angepasst werden, so dass diese nutzerfreundlich, in der Regel waagerecht, ablesbar sind. So wird eine universelle Positionierung des Displays ermöglicht.

In einer vorteilhaften Ausgestaltung der Erfindung ist der Sensor ein Neigungssensor, Winkelsensor oder Positionssensor. Dies hat den besonderen Vorteil, dass eine einfache Möglichkeit einer Lageermittlung, d.h. einer Neigung oder einer Winkelermittlung, insbesondere einer waagerechten oder lotrechten respektive horizontalen oder vertikalen Position des Displays, ermöglicht wird.

Erfindungsgemäß weist das Display einen Display-Mikrocontroller auf, der mit dem Sensor verbunden ist, zur Steuerung der Anzeige der angezeigten Informationen.

Dies hat den besonderen Vorteil, dass eine Realisierung zur nutzergerechten Anzeige von Informationen gegeben ist.

In einer vorteilhaften Ausgestaltung der Erfindung weist die elektronische Auslöseeinheit (ETU) einen ersten Mikrocontroller, der insbesondere die Überschreitung von Stromgrenzwerten oder Strom-Zeit-Grenzwerten überwacht,
und einen zweiten Mikrocontroller auf, der insbesondere die auf dem Display anzuzeigenden Informationen bereitstellt. Dies hat den besonderen Vorteil, dass eine Trennung von Schutzfunktionen und Anzeigeinformationen in der elektronischen Auslöseeinheit gegeben ist, so dass die Schutzfunktionalität immer gegeben ist und die Anzeigefunktionalität separat verarbeitet wird.

In einer vorteilhaften Ausgestaltung der Erfindung sind die elektronische Auslöseeinheit (ETU) sowie das Display derart ausgestaltet, dass bei mit der elektronischen Auslöseeinheit verbundenem Display die anzuzeigenden Informationen vom zweiten Mikrocontroller zum Display übertragen werden und dort positionsrichtig angezeigt werden.

Dies hat den besonderen Vorteil, dass die Steuerung der Anzeigeeinstellungen separat von der Schutzfunktionalität des Leistungsschalters realisiert ist und so ein zuverlässiger Betrieb des Leistungsschalters gegeben ist.

In einer vorteilhaften Ausgestaltung der Erfindung ist für die elektrische Verbindung zwischen elektronischer Auslöseeinheit (ETU) und Display eine USB-Schnittstelle vorgesehen ist.

Dies hat den besonderen Vorteil, dass eine einfache, standardisierte und kostengünstige Möglichkeit der Kommunikation zwischen elektronischer Auslöseeinheit und Display gegeben ist.

In einer vorteilhaften Ausgestaltung der Erfindung weist das Display eine LCD-Anzeige auf.

Dies hat den besonderen Vorteil, dass eine einfache Anzeigemöglichkeit für das Display gegeben ist.

In einer vorteilhaften Ausgestaltung der Erfindung weist das Display ein Netzteil auf.

Dies hat den besonderen Vorteil, dass eine eigene Energieversorgung für das Display gegeben ist, so dass die Fremdspannungsversorgung vereinfacht ausgeführt werden kann. Es braucht nur eine Betriebsspannung zugeführt werden, alle weiteren Spannungen werden intern durch das Netzteil selbst erzeugt.

In einer vorteilhaften Ausgestaltung der Erfindung weist das Display ein Keypad oder eine Touchbedienung für eine Eingabefunktionalität auf.

Dies hat den besonderen Vorteil, dass eine einfache Eingabemöglichkeit für das Display gegeben ist.

In einer vorteilhaften Ausgestaltung der Erfindung ist der Leistungsschalter derart ausgestaltet, dass verschiedene Orientierungen auswählbar sind, mit der die Informationen angezeigt werden können.

Dies hat den besonderen Vorteil, dass das Display auch die Informationen in einer fest eingestellten Orientierung, die von den üblichen Orientierungen abweichen kann, anzeigen kann.

In einer vorteilhaften Ausgestaltung der Erfindung ist die elektronische Auslöseeinheit (ETU) derart ausgestaltet, dass verschiedene Menüstrukturen programmiert werden können, die im zweiten Mikrocontroller gespeichert und bei verbundenem Display dort angezeigt werden.

Dies hat den besonderen Vorteil, dass die Anzeigeinformationen konfigurierbar ausgeführt sind. So können die Anzeigeinformationen individuell an den Benutzer oder Kunden bzw. durch diese angepasst werden.

In einer vorteilhaften Ausgestaltung der Erfindung ist die elektronische Auslöseeinheit (ETU) derart ausgestaltet, dass dem zweiten Mikrocontroller zugeordnete Anwendungsaufgaben einstellbar bzw. veränderbar sind.

Dies hat den besonderen Vorteil, dass die Anwendungsaufgaben konfigurierbar ausgeführt sind. So können die Anwendungsaufgaben individuell an den Benutzer oder Kunden bzw. durch diese angepasst werden.

Erfindungsgemäß wird parallel ein abnehmbares Display für einen Leistungsschalter nach einer der vorhergehenden Ausgestaltungen beansprucht, mit den gleichen bzw. weiteren Vorteilen.

In einer vorteilhaften Ausgestaltung der Erfindung ist das abnehmbare Display für unterschiedliche Typen (bzw. mehrere Typen) von elektronischen Auslöseeinheiten bzw. Leistungsschaltern ausgestaltet.

Dies hat den besonderen Vorteil, dass nur ein Display für unterschiedliche Leistungsschalter, z.B. in einer Anlage, z.B. durch eine Servicetechniker mitgeführt werden braucht, um z.B. bei Störung, Wartung oder Inbetriebnahme den Leistungsschalter zu konfigurieren. Ferner wird durch das abgenommene Display ggfs. eine Manipulation des Leistungsschalters erschwert.

Alle Ausgestaltungen, sowohl in abhängiger Form rückbezogen auf den Patentanspruch 1 oder 14, als auch rückbezogen lediglich auf einzelne Merkmale oder Merkmalskombinationen von Patentansprüchen, bewirken eine Verbesserung eines (Niederspan-nungs-)Leistungsschalters mit Display.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

### Dabei zeigt die Zeichnung:

Figur 1 eine schematische Darstellung mit Leistungsschaltern zur Erläuterung der Erfindung,
Figur 2 eine schematische Darstellung eines Displays zur Erläuterung der Erfindung.

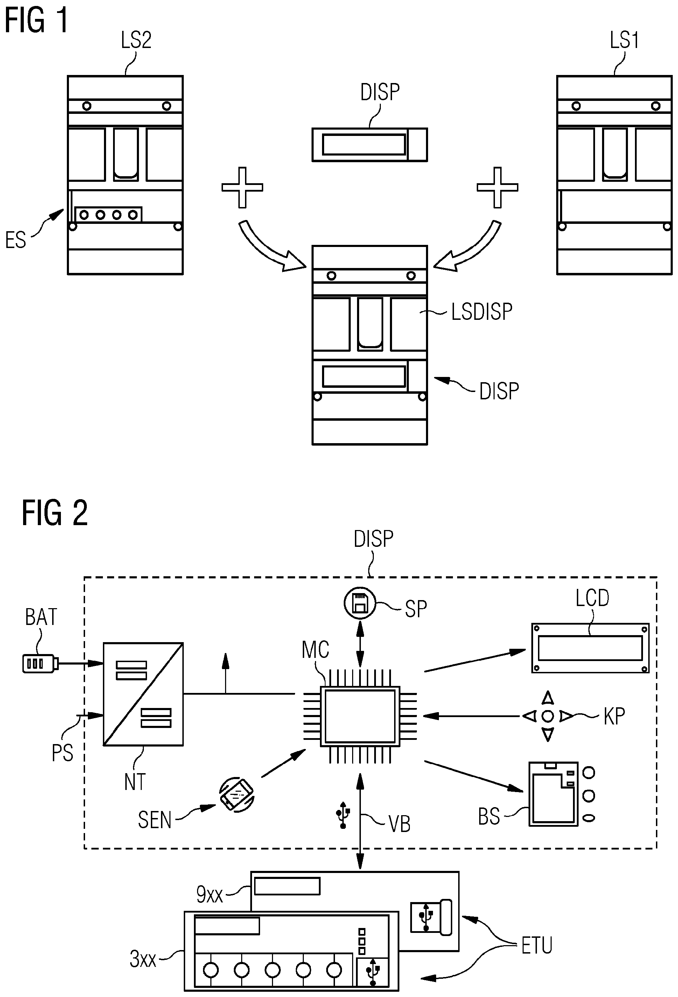

Figur 1 zeigt im oberen Bereich einen ersten Leistungsschalter LS1, einen zweiten Leistungsschalter LS2 und ein einzelnes Display DISP. Die ersten und zweiten Leistungsschalter LS1, LS2 im oberen Bereich weisen kein Display auf. Die ersten und zweiten Leistungsschalter LS1, LS2 sind beispielsweise Niederspannungsleistungsschalter, wie im Beispiel gemäß Figur 1 Kompaktleistungsschalter (MCCB). Der erste Leistungsschalter LS1 ist ein Leistungsschalter eines ersten Typs bzw. einer ersten Bauart. Der zweite Leistungsschalter LS2 ist ein Leistungsschalter eines zweiten Typs bzw. einer zweiten Bauart, die sich vom ersten Leistungsschalter LS1 unterscheidet. Beispielsweise weist der zweite Leistungsschalter LS2 an seiner Frontseite Einstellelemente ES auf, mit dem Parameter, wie Schwellwerte oder Auslösecharakteristiken des zweiten Leistungsschalter LS2 eingestellt werden können. Der erste Leistungsschalter LS1 weist diese Einstellelemente nicht auf.

Im unteren Bereich ist ein Leistungsschalter LSDISP dargestellt, wie beispielsweise ein Leistungsschalter ersten oder zweiten Typs LS1, LS2, der ein montiertes Display DISP aufweist.

Ist der Leistungsschalter LSDISP ein Leistungsschalter zweiten Typs LS2, dann werden durch das montierte Display DISP die Einstellelemente ES verdeckt. Eine Einstellung ist dann beispielsweise über das Display DISP, das in diesem Fall eine Eingabefunktionalität aufweist, möglich.

Ist der Leistungsschalter LSDISP ein Leistungsschalter ersten Typs LS1, dann wird durch das montierte Display DISP mit einer Eingabefunktionalität diese für den Leistungsschalter ermöglicht.

Figur 2 zeigt eine schematische Darstellung eines beispielhaften Displays DISP. Das Display weist einen Display-Mikrocontroller MC auf. Dieser ist mit einem Netzteil NT zur Energieversorgung des Display-Mikrocontroller MC bzw. des Display DISP verbunden. Das Netzteil NT weist wiederum einen Anschluss PS, für eine (externe) Versorgungsspannung auf. Alternativ bzw. zusätzlich kann das Netzteil NT mit einer externen oder internen Batterie BAT verbunden sein, was einen mobilen sowie leistungsschalterunabhängigen Betrieb ermöglicht bzw. unterstützt.

Die Energieversorgung kann beispielsweise durch eine Schnittstelle an der Frontseite der elektronischen Auslöseeinheit ETU erfolgen.

Ferner kann ein Speicher SP vorgesehen, wie ein EEPROM, der mit dem Display-Mikrocontroller MC verbunden ist.

Das Display DISP weist ferner eine Anzeige LCD, wie eine LCD-Anzeige oder ein Dot Matrix Display, auf. Ferner können Lichtemitterdioden vorgesehen sein. Diese Anzeige LCD kann wiederum mit dem Display-Mikrocontroller MC verbunden sein.

Das Display DISP kann ferner eine Eingabefunktionalität, wie ein Keypad KP, Touchpad / Touchbedienung, o.ä. aufweisen. Dieses kann wiederum mit dem Display-Mikrocontroller MC verbunden sein.

Das abnehmbare Display DISP weist einen Sensor SEN auf, zur Ermittlung einer Neigung oder eines Winkels, insbesondere einer waagerechten oder lotrechten respektive horizontalen oder vertikalen Position des Displays DISP.

Dieser kann wiederum mit dem Display-Mikrocontroller MC verbunden sein. Der Sensor SEN kann ein Neigungssensor, Winkelsensor oder Positionssensor sein.

Das Display bzw. der Display-Mikrocontroller MC kann derart ausgestaltet sein, dass in Zusammenwirken mit dem Sensor SEN der Inhalt der angezeigten Informationen abhängig von einer horizontalen oder vertikalen Montage des Displays angepasst wird, so dass die angezeigten Informationen nutzerfreundlich ablesbar sind.

Das Display DISP weist ferner eine elektrische Verbindung VB auf, wie beispielsweise eine drahtgebundene oder drahtlose Schnittstelle, wie eine USB-Schnittstelle, Bluetooth- oder Zigbee-Schnittstelle auf, die eine Verbindung zwischen Display DISP und Leistungsschalter, LS1, LS2, LSDISP bzw. deren elektronischer Auslöseeinheit ETU, herstellen kann (bzw. herstellt).

Im Beispiel gemäß Figur 2 sind zwei elektronische Auslöseeinheiten ETU, 3xx, 9xx angedeutet.

Die elektronische Auslöseeinheit 9xx kann beispielsweise im ersten Leistungsschalter LS1 eingebaut bzw. zugeordnet sein. Die elektronische Auslöseeinheit 3xx kann beispielsweise im zweiten Leistungsschalter LS2 eingebaut bzw. zugeordnet sein.

Erfindungsgemäß kann ferner eine (gesicherte) BenutzerSchnittstelle BS vorgesehen sein, über die Kunden Anzeige-Voreinstellungen hochladen können. Diese Benutzer-Schnittstelle BS kann wiederum mit dem Display-Mikrocontroller MC verbunden sein, wie in Figur 2 dargestellt.

Das Display DISP kann zum Aufschnappen (Einschnappen) oder Einrasten ausgeführt sein. So ist ein Snap-on-Display gegeben, das der Benutzer bzw. der Kunde entfernen bzw. installieren kann.

Wenn der Kunde dasselbe Display DISP für mehrere Leistungsschalter / Geräte verwenden soll, soll das Display erfindungsgemäß rekonfiguriert werden.

Bei Geräten des Standes der Technik passen sich die Anzeigeinhalte der Ausrichtung des Leistungsschalters nicht an. D.h. ist das Gerät beispielsweise horizontal (vertikal) montiert, wird der Text auf der Anzeige beispielsweise immer im Querformat angezeigt.

Möchte ein Kunde ferner beispielsweise Messwerte des Leistungsschalters in einem anderen Format sehen, z.B. ein Diagramm anstelle von Zahlen, kann die Anzeige in der Regel nicht geändert werden.

Erfindungsgemäß wird bzw. kann in jeder elektronischen Auslöseeinheit ETU neben dem für die Schutzfunktionen zuständigen (ersten) Mikrocontroller ein dedizierter Anwendungscontroller/ (weiterer) zweiter Mikrocontroller vorgesehen sein.

Die elektronische Auslöseeinheit ETU weist eine Schutzsteuerung auf. Schutzeinstellungen und Schutzalgorithmen werden über diese Schutzsteuerung gesteuert. Die eingestellten Schutzparameter sollen während des laufenden Betriebes in der Regel nicht geändert werden.

Erfindungsgemäß ist deshalb neben dem ersten Mikrocontroller für die Schutzparameter / der insbesondere die Überschreitung von Stromgrenzwerten oder Strom-Zeit-Grenzwerten überwacht, ein zweiter Mikrocontroller vorgesehen, der insbesondere die auf dem Display anzuzeigenden Informationen bereitstellt.

Die Funktionen dieses zweiten Mikrocontrollers (Anwendungsmikrocontroller) können im Betrieb durch den Benutzer respektive Kunden geändert werden.

Wenn ein Display DISP (Anzeigemodul) an einen Leistungsschalter / elektronische Auslöseeinheit ETU angeschlossen wird, kann in einer Ausgestaltung das Display DISP (Anzeigemodul) die Einstellungen vom zweiten Mikrocontroller übernehmen, die beispielsweise dort gespeichert sind.

Wenn das Display DISP an einen anderen Leistungsschalter / andere elektronische Auslöseeinheit ETU angeschlossen wird, ändert sich folglich die Anzeige bzw. Anzeigevoreinstellungen.

Der Kunde kann in einer Ausgestaltung verschiedene Voreinstellungen in den zweiten Mikrocontroller / Anwendungscontroller herunterladen. Der Kunde kann beispielsweise Vorlagen für Anzeigedarstellungen herunterladen. Diese Vorlagen können modifiziert werden, wobei kundenspezifische Darstellungen möglich werden.

Der Kunde kann beispielsweise auch die Ausrichtung der angezeigten Informationen auf dem Display DISP auswählen.

Der physische Formfaktor der Anzeige ändert sich nicht, die Formatierung und der Inhalt der Anzeige wird geändert, um dem Formfaktor und den Anzeigepräferenzen des Kunden zu entsprechen. Gemeint ist damit, dass die Abmessungen des Displays (z.B. 80mm * 35mm) erhalten bleiben. Egal ob man den Leistungsschalter um 90 Grad dreht oder nicht. Auch ändert sich (logischerweise) der Formfaktor nicht, wenn ein anderes Gerät (Leistungsschalter) angeschlossen wurde.

Es ändert sich aber die Art und Weise, wie die Informationen angezeigt werden. Wird der Schalter gedreht, dann verändert sich die Anzeige in der Art, dass sie immer noch ablesbar ist, aber das Verhältnis nun z.B. 35mm * 80mm ist. Damit muss die Information neu in der Anzeige arrangiert werden, erfindungsgemäß z.B. automatisch.

Die Idee ist auch, dass es einen Grundstock an Anzeigebildern (z.B. 20 Anzeigen mit vordefinierten Inhalten) gibt. Die kann der Benutzer/Kunde je nach Wunsch teilweise deaktivieren und seinerseits neu geschaffene Anzeigebilder hinzufügen.

Der Kunde kann z.B. die Menüstruktur der angezeigten Informationen auf dem Display DISP nach seinen Wünschen ändern. Er kann sich beispielsweise eine "Menümaske" herunterladen, mit der die Anzahl der interessierenden Parameter eingestellt bzw. reduziert wird. Mit dieser muss er beispielsweise nicht alle Parameter durchgehen und kann nur die Parameter durchsehen, die von Interesse für ihn sind. Er kann diese Maske jederzeit z.B. über eine externe Software zurücksetzen.

Erfindungsgemäß wird ein weiterer / zweiter Mikrocontroller in der elektronischen Auslöseeinheit verwendet, der mit Voreinstellungen zur Anzeige von Informationen auf einem Display DISP geladen werden kann und der mit dem Display DSIP (Anzeigemodul) kommuniziert, ohne den ersten (Schutz-)Mikrocontroller zu modifizieren. So ist eine einfache Ergänzung bestehender elektronischer Auslöseeinheiten möglich.

Der Schutz-Mikrocontroller ist gesichert. Der Kunde hat die Möglichkeit, das Produkt / die Darstellung anzupassen. Das Display DISP (Anzeigemodul) kann seine Einstellungen automatisch ändern, je nachdem, mit welcher elektronischer Auslöseeinheit ETU es verbunden ist. Die Informationen auf dem Display werden lagerichtig angezeigt, so dass nutzfreundlich abgelesen werden kann.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leistungsschalter (LS1, LS2, LSDISP) für einen Niederspannungsstromkreis,
mit Eingangs- und Ausgangsanschlüssen für Leiter des Niederspannungsstromkreises, wobei leistungsschalterintern der Niederspannungsstromkreis unterbrochen oder geschlossen werden kann,
mit einem Stromsensor, der die Höhe des elektrischen Stromes im Niederspannungsstromkreis ermittelt und mit
einer elektronischen Auslöseeinheit (ETU) verbunden ist, die ein Display (DSIP) zur Anzeige von Informationen aufweist und bei Überschreitung von Stromgrenzwerten oder Strom-Zeit-Grenzwerten den Niederspannungsstromkreis unterbricht, wobei das Display (DISP) abnehmbar ausgestaltet ist,
**dadurch gekennzeichnet, dass**
das abnehmbare Display (DSIP) einen Sensor (SEN) aufweist,
zur Ermittlung einer Neigung oder eines Winkels einer waagerechten oder lotrechten respektive horizontalen oder vertikalen Position des Displays (DISP), und derart ausgestaltet ist, dass der Inhalt der angezeigten Informationen abhängig von einer horizontalen oder vertikalen Montage des Displays (DISP) angepasst wird, so dass die angezeigten Informationen nutzerfreundlich ablesbar sind, und
das Display (DISP) einen Display-Mikrocontroller (MC) aufweist, der mit dem Sensor (SEN) verbunden ist, zur Steuerung der Anzeige der angezeigten Informationen.

2. Leistungsschalter (LS1, LS2, LSDISP) nach Patentanspruch 1,
**dadurch gekennzeichnet,**
**dass** das Display (DSIP) zum Aufschnappen oder Einrasten auf der elektronischen Auslöseeinheit (ETU) ausgestaltet ist.

3. Leistungsschalter (LS1, LS2, LSDISP) nach Patentanspruch 1 oder 2,
**dadurch gekennzeichnet,**
**dass** das Display (DSIP) neben einer Anzeigefunktionalität auch eine Eingabefunktionalität aufweist.

4. Leistungsschalter (LS1, LS2, LSDISP) nach einem der vorhergehenden Patentansprüche,
**dadurch gekennzeichnet,**
**dass** der Sensor (SEN) ein Neigungssensor, Winkelsensor oder Positionssensor ist.

5. Leistungsschalter (LS1, LS2, LSDISP) nach einem der vorhergehenden Patentansprüche,
**dadurch gekennzeichnet,**
**dass** die elektronische Auslöseeinheit (ETU) einen ersten Mikrocontroller, der insbesondere die Überschreitung von Stromgrenzwerten oder Strom-Zeit-Grenzwerten überwacht,
und einen zweiten Mikrocontroller aufweist, der insbesondere die auf dem Display (DISP) anzuzeigenden Informationen bereitstellt.

6. Leistungsschalter (LS1, LS2, LSDISP) nach Patentanspruch 5,
**dadurch gekennzeichnet,**
**dass** die elektronische Auslöseeinheit (ETU) sowie das Display (DISP) derart ausgestaltet sind, dass bei mit der elektronischen Auslöseeinheit (ETU) verbundenem Display (DISP) die anzuzeigenden Informationen vom zweiten Mikrocontroller zum Display (DISP) übertragen werden und dort positionsrichtig angezeigt werden.

7. Leistungsschalter (LS1, LS2, LSDISP) nach einem der vorhergehenden Patentansprüche,
**dadurch gekennzeichnet,**
**dass** für die elektrische Verbindung (VB) zwischen elektronischer Auslöseeinheit (ETU) und Display (DISP) eine USB-Schnittstelle vorgesehen ist.

8. Leistungsschalter (LS1, LS2, LSDISP) nach einem der vorhergehenden Patentansprüche,
**dadurch gekennzeichnet,**
**dass** das Display (DISP) eine LCD-Anzeige (LCD) aufweist.

9. Leistungsschalter (LS1, LS2, LSDISP) nach einem der vorhergehenden Patentansprüche,
**dadurch gekennzeichnet,**
**dass** das Display (DISP) ein Netzteil (NT) aufweist.

10. Leistungsschalter (LS1, LS2, LSDISP) nach einem der vorhergehenden Patentansprüche,
**dadurch gekennzeichnet,**
**dass** das Display (DISP) ein Keypad (KP) oder ein Touchpad respektive Touchbedienung für eine Eingabefunktionalität aufweist.

11. Leistungsschalter (LS1, LS2, LSDISP) nach einem der vorhergehenden Patentansprüche,
**dadurch gekennzeichnet,**
**dass** der Leistungsschalter (LS1, LS2, LSDISP) derart ausgestaltet ist, dass verschiedene Orientierungen auswählbar sind, mit der die Informationen angezeigt werden können.

12. Leistungsschalter (LS1, LS2, LSDISP) nach einem der vorhergehenden Patentansprüche,
**dadurch gekennzeichnet,**
**dass** die elektronische Auslöseeinheit (ETU) derart ausgestaltet ist, dass verschiedene Menüstrukturen programmiert werden können, die im zweiten Mikrocontroller gespeichert und bei verbundenem Display (DISP) dort angezeigt werden.

13. Leistungsschalter (LS1, LS2, LSDISP) nach einem der vorhergehenden Patentansprüche,
**dadurch gekennzeichnet,**
**dass** die elektronische Auslöseeinheit (ETU) derart ausgestaltet ist, dass dem zweiten Mikrocontroller zugeordnete Anwendungsaufgaben einstellbar bzw. veränderbar sind.

14. Abnehmbares Display (DISP) einer elektronischen Auslöseeinheit eines Leistungsschalter (LS1, LS2, LSDISP),
**dadurch gekennzeichnet,**
**dass** das abnehmbare Display (DSIP) einen Sensor (SEN) aufweist, zur Ermittlung einer Neigung oder eines Winkels einer waagerechten oder lotrechten respektive horizontalen oder vertikalen Position des Displays (DISP), und derart ausgestaltet ist, dass der Inhalt der angezeigten Informationen abhängig von einer horizontalen oder vertikalen Montage des Displays (DISP) angepasst wird, so dass die angezeigten Informationen nutzerfreundlich ablesbar sind, und
das Display (DISP) einen Display-Mikrocontroller (MC) aufweist, der mit dem Sensor (SEN) verbunden ist, zur Steuerung der Anzeige der angezeigten Informationen.

15. Abnehmbares Display (DISP) nach Patentanspruch 14, **dadurch gekennzeichnet, dass** das Display (DSIP) zum Aufschnappen oder Einrasten auf der elektronischen Auslöseeinheit (ETU) ausgestaltet ist.

16. Abnehmbares Display (DISP) nach Patentanspruch 14 oder
15, **dadurch gekennzeichnet, dass** das Display (DSIP) für unterschiedliche Typen von elektronischen Auslöseeinheiten (ETU) bzw. Leistungsschaltern (LSI, LS2, LSDISP) ausgestaltet ist.

## Claims

1. Circuit breaker (LS1, LS2, LSDISP) for a low-voltage circuit,
comprising input and output connections for conductors of the low-voltage circuit, wherein the low-voltage circuit can be interrupted or closed inside the circuit breaker,
comprising a current sensor that determines the level of the electric current in the low-voltage circuit and is connected to an electronic trip unit (ETU) that has a display (DISP) for displaying information and interrupts the low-voltage circuit if current limit values or current/time limit values are exceeded, wherein
the display (DISP) is designed to be removable,
**characterized in that**
the removable display (DISP) has a sensor (SEN) for determining an inclination or an angle of a horizontal or vertical position of the display (DISP), and is designed in such a way that the content of the displayed information is adjusted depending on a horizontal or vertical mounting of the display (DISP), such that the displayed information can be read in a user-friendly manner, and
the display (DISP) has a display microcontroller (MC), which is connected to the sensor (SEN), for controlling the display of the displayed information.

2. Circuit breaker (LS1, LS2, LSDISP) according to Claim 1,
**characterized**
**in that** the display (DISP) is designed to snap or latch on to the electronic trip unit (ETU).

3. Circuit breaker (LS1, LS2, LSDISP) according to Claim 1 or 2,
**characterized**
**in that** the display (DISP) also has an input functionality in addition to a display functionality.

4. Circuit breaker (LS1, LS2, LSDISP) according to one of the preceding claims,
**characterized**
**in that** the sensor (SEN) is an inclination sensor, an angle sensor or a position sensor.

5. Circuit breaker (LS1, LS2, LSDISP) according to one of the preceding claims,
**characterized**
**in that** the electronic trip unit (ETU) has a first microcontroller that in particular monitors the exceedance of current limit values or current/time limit values
and a second microcontroller that in particular provides the information to be displayed on the display (DISP).

6. Circuit breaker (LS1, LS2, LSDISP) according to Claim 5,
**characterized**
**in that** the electronic trip unit (ETU) and the display (DISP) are designed in such a way that, if the display (DISP) is connected to the electronic trip unit (ETU), the information to be displayed is transmitted from the second microcontroller to the display (DISP) and is displayed thereon in the correct position.

7. Circuit breaker (LS1, LS2, LSDISP) according to one of the preceding claims,
**characterized**
**in that** a USB interface is provided for the electrical connection (VB) between the electronic trip unit (ETU) and the display (DISP).

8. Circuit breaker (LS1, LS2, LSDISP) according to one of the preceding claims,
**characterized**
**in that** the display (DISP) has an LCD display (LCD).

9. Circuit breaker (LS1, LS2, LSDISP) according to one of the preceding claims,
**characterized**
**in that** the display (DISP) has a power supply unit (NT).

10. Circuit breaker (LS1, LS2, LSDISP) according to one of the preceding claims,
**characterized**
**in that** the display (DISP) has a keypad (KP) or a touchpad or touch control for an input functionality.

11. Circuit breaker (LS1, LS2, LSDISP) according to one of the preceding claims,
**characterized**
**in that** the circuit breaker (LS1, LS2, LSDISP) is designed in such a way that different orientations with which the information can be displayed can be selected.

12. Circuit breaker (LS1, LS2, LSDISP) according to one of the preceding claims,
**characterized**
**in that** the electronic trip unit (ETU) is designed in such a way that different menu structures can be programmed, which are stored in the second microcontroller and, in the case of a connected display (DISP), are displayed thereon.

13. Circuit breaker (LS1, LS2, LSDISP) according to one of the preceding claims,
**characterized**
**in that** the electronic trip unit (ETU) is designed in such a way that application tasks assigned to the second microcontroller can be adjusted or changed.

14. Removable display (DISP) of an electronic trip unit of a circuit breaker (LS1, LS2, LSDISP),
**characterized**
**in that** the removable display (DISP) has a sensor (SEN) for determining an inclination or an angle of a horizontal or vertical position of the display (DISP), and is designed in such a way that the content of the displayed information is adjusted depending on a horizontal or vertical mounting of the display (DISP), such that the displayed information can be read in a user-friendly manner, and
the display (DISP) has a display microcontroller (MC), which is connected to the sensor (SEN), for controlling the display of the displayed information.

15. Removable display (DISP) according to Claim 14, **characterized in that** the display (DISP) is designed to snap or latch on to the electronic trip unit (ETU).

16. Removable display (DISP) according to Claim 14 or 15, **characterized in that** the display (DISP) is designed for different types of electronic trip units (ETU) or circuit breakers (LS1, LS2, LSDISP).

## Revendications

1. Disjoncteur (LS1, LS2, LSDISP) pour un circuit électrique basse tension,
avec des raccordements d'entrée et de sortie pour les conducteurs du circuit électrique basse tension, dans lequel le circuit électrique basse tension peut être interrompu ou fermé à l'intérieur du disjoncteur,
avec un capteur de courant qui détermine l'intensité du courant électrique dans le circuit électrique basse tension et qui est relié à une unité de déclenchement électronique (ETU) qui présente une unité d'affichage (DISP) pour l'affichage d'informations et qui interrompt le circuit électrique basse tension en cas de dépassement de valeurs limites de courant ou de valeurs limites de temps de courant, dans lequel l'unité d'affichage (DISP) est conçue de manière amovible,
**caractérisé en ce que**
l'unité d'affichage (DISP) amovible présente un capteur (SEN) pour déterminer une inclinaison ou un angle d'une position horizontale ou verticale de l'unité d'affichage (DISP), et est conçue de telle sorte que le contenu des informations affichées est adapté en fonction d'un montage horizontal ou vertical de l'unité d'affichage (DISP), de sorte que les informations affichées peuvent être lues de manière conviviale, et
l'unité d'affichage (DISP) présente un microcontrôleur d'affichage (MC) qui est relié au capteur (SEN) pour commander l'affichage des informations affichées.

2. Disjoncteur (LS1, LS2, LSDISP) selon la revendication 1,
**caractérisé en ce que**
l'unité d'affichage (DISP) est conçue pour être encliquetée ou enclenchée sur l'unité de déclenchement électronique (ETU).

3. Disjoncteur (LS1, LS2, LSDISP) selon la revendication 1 ou 2,
**caractérisé en ce que**
l'unité d'affichage (DISP) présente, en plus d'une fonctionnalité d'affichage, une fonctionnalité de saisie.

4. Disjoncteur (LS1, LS2, LSDISP) selon l'une des revendications précédentes,
**caractérisé en ce que**
le capteur (SEN) est un capteur d'inclinaison, un capteur d'angle ou un capteur de position.

5. Disjoncteur (LS1, LS2, LSDISP) selon l'une des revendications précédentes,
**caractérisé en ce que**
l'unité de déclenchement électronique (ETU) présente un premier microcontrôleur qui surveille en particulier le dépassement de valeurs limites de courant ou de valeurs limites de temps de courant,
et un second microcontrôleur qui fournit en particulier les informations à afficher sur l'unité d'affichage (DISP).

6. Disjoncteur (LS1, LS2, LSDISP) selon la revendication 5,
**caractérisé en ce que**
l'unité de déclenchement électronique (ETU) ainsi que l'unité d'affichage (DISP) sont conçues de telle sorte que, lorsque l'unité d'affichage (DISP) est reliée à l'unité de déclenchement électronique (ETU), les informations à afficher sont transmises du second microcontrôleur à l'unité d'affichage (DISP) et y sont affichées dans la position correcte.

7. Disjoncteur (LS1, LS2, LSDISP) selon l'une des revendications précédentes,
**caractérisé en ce que**
une interface USB est prévue pour la liaison électrique (VB) entre l'unité de déclenchement électronique (ETU) et l'unité d'affichage (DISP).

8. Disjoncteur (LS1, LS2, LSDISP) selon l'une des revendications précédentes,
**caractérisé en ce que**
l'unité d'affichage (DISP) présente un affichage à cristaux liquides (LCD).

9. Disjoncteur (LS1, LS2, LSDISP) selon l'une des revendications précédentes,
**caractérisé en ce que**
l'unité d'affichage (DISP) présente un bloc d'alimentation (NT).

10. Disjoncteur (LS1, LS2, LSDISP) selon l'une des revendications précédentes,
**caractérisé en ce que**
l'unité d'affichage (DISP) présente un pavé numérique (KP) ou un pavé tactile ou une commande tactile pour une fonctionnalité de saisie.

11. Disjoncteur (LS1, LS2, LSDISP) selon l'une des revendications précédentes,
**caractérisé en ce que**
le disjoncteur (LS1, LS2, LSDISP) est conçu de telle sorte que différentes orientations peuvent être sélectionnées, avec lesquelles les informations peuvent être affichées.

12. Disjoncteur (LS1, LS2, LSDISP) selon l'une des revendications précédentes,
**caractérisé en ce que**
l'unité de déclenchement électronique (ETU) est conçue de telle sorte que différentes structures de menu peuvent être programmées, lesquelles sont mémorisées dans le second microcontrôleur et y sont affichées lorsque l'unité d'affichage (DISP) est connectée.

13. Disjoncteur (LS1, LS2, LSDISP) selon l'une des revendications précédentes,
**caractérisé en ce que**
l'unité de déclenchement électronique (ETU) est conçue de telle sorte que des tâches d'application affectées au second microcontrôleur peuvent être réglées ou modifiées.

14. Unité d'affichage (DISP) amovible d'une unité de déclenchement électronique d'un disjoncteur (LS1, LS2, LSDISP), **caractérisé en ce que**
l'unité d'affichage (DISP) amovible présente un capteur (SEN) pour déterminer une inclinaison ou un angle d'une position horizontale ou verticale de l'unité d'affichage (DISP), et est conçue de telle sorte que le contenu des informations affichées est adapté en fonction d'un montage horizontal ou vertical de l'unité d'affichage (DISP), de sorte que les informations affichées peuvent être lues de manière conviviale, et l'unité d'affichage (DISP) présente un microcontrôleur d'affichage (MC) qui est relié au capteur (SEN) pour commander l'affichage des informations à afficher, **caractérisé en ce que** le microcontrôleur d'affichage (MC) présente une interface de communication avec le capteur (SEN).

15. Unité d'affichage (DISP) amovible selon la revendication 14, **caractérisé en ce que** l'unité d'affichage (DISP) est conçue pour être encliquetée ou enclenchée sur l'unité de déclenchement électronique (ETU).

16. Unité d'affichage (DISP) amovible selon la revendication 14 ou 15, **caractérisée en ce que** l'unité d'affichage (DISP) est conçue pour différents types d'unités de déclenchement électroniques (ETU) et/ou de disjoncteurs (LS1, LS2, LSDISP).
